# EUROPEAN PATENT APPLICATION

(11) **EP 4 737 530 A1**
(43) Date of publication of application: **06.05.2026**
(21) Application number: 24831907.1
(22) Date of filing: 24.06.2024
(51) Int. Cl.: C09J 7/38, C09J 7/30, C09J 133/00, C09J 133/14

(54) **ACTIVE ENERGY RAY-CURABLE ADHESIVE COMPOSITION AND ADHESIVE SHEET**

(30) Priority: 30.06.2023 JP 2023108814
(71) Applicant: Toagosei Co., Ltd., Minato-ku Tokyo 105-8419 (JP)
(72) Inventor: TAKEYA, Nobuyuki, Tokyo 105-8419 (JP); OOFUSA, Kazuki, Tokyo 105-8419 (JP); HASHIMOTO, Yuusuke, Tokyo 105-8419 (JP)
(74) Representative: TBK
(86) International application number: PCT/JP2024/022821
(87) International publication number: WO 2025/005046

(57) **Abstract**

An active energy ray-curable pressure-sensitive adhesive composition contains no a compound having two or more reactive unsaturated bonds in one molecule, and contains an acrylic pressure-sensitive adhering polymer (A) having at least one selected from the group consisting of an ether group, a hydroxyl group, aliphatic tertiary carbon, a secondary amino group and a tertiary amino group in a side chain. The acrylic pressure-sensitive adhering polymer (A) includes a structural unit (U1) having a hydrogen abstraction type photopolymerization initiator structure. A content rate of the structural unit (U1) in the acrylic pressure-sensitive adhering polymer (A) is 0.1% by mass or more and 50% by mass or less relative to the entire structural unit of the acrylic pressure-sensitive adhering polymer (A), and a content of a crosslinking agent is 0 parts by mass or more and 3 parts by mass or less based on a content of the acrylic pressure-sensitive adhering polymer (A) of 100 parts by mass.

## Description

### Technical Field

### [Cross Reference to Related Application]

The present application claims the priority based on Japanese Patent Application No. 2023-108814 filed on June 30, 2023, the entirety of which is herein incorporated by reference.

The present disclosure relates to an active energy ray-curable pressure-sensitive adhesive composition and a pressure-sensitive adhesion sheet.

### Background Art

Pressure-sensitive adhesives are processed into various forms such as tapes or labels, and are utilized in a variety of applications. In recent years, in order to deal with advancement in electronic technology, pressure-sensitive adhesion sheets have also been used in manufacturing processes of semiconductor devices in order to improve handleability during semiconductor manufacturing, further increase performance of semiconductor elements, and the like (see, for example, Patent Literature 1 and Patent Literature 2).

Patent Literature 1 discloses a pressure-sensitive adhesion tape for heat-resistant temporary bonding, in which a pressure-sensitive adhesive layer is formed which includes a material for pressure-sensitive adhesive layer formation, the material containing an acrylic polymer, an energy ray-polymerizable oligomer, a polymerization initiator, and a crosslinking agent, and the weight loss rate, as determined by thermogravimetric measurement of the polymerization initiator, is a predetermined value or less. Patent Literature 2 discloses a pressure-sensitive adhesion tape provided with a pressure-sensitive adhesive layer including a (meth)acrylic polymer and a photopolymerization initiator having a coefficient of molar absorbance at a wavelength of 385 nm, of a predetermined value or more. These pressure-sensitive adhesion tapes are used for the purposes of temporary fixation and surface protection of electronic components, and these are irradiated with an active energy ray at the time where such fixation and surface protection of electronic components are made unnecessary, and thus are weakened in adhesion strength and exhibit easy releasability.

In recent years, as semiconductor devices have been increased in performance and decreased in thickness, there have been proposed FOWLP (Fan Out Wafer Level Package) technologies and three-dimensional stacked semiconductor (3D-IC) technologies as new semiconductor manufacturing technologies. FOWLP is a technology in which a re-wiring layer is formed on a semiconductor wafer to expand a terminal outside of a semiconductor chip, and thus can allow a semiconductor device to be further increased in performance and decreased in thickness.

### Citation List

### Patent Literature

Patent Literature 1: Japanese Patent Laid-Open No. 2012-31316
Patent Literature 2: Japanese Patent Laid-Open No. 2016-89045

### Summary of Invention

### Technical Problem

In a semiconductor manufacturing process according to FOWLP, a pressure-sensitive adhesion tape is attached on a support substrate such as glass, a semiconductor chip is placed on a pressure-sensitive adhesive layer of the pressure-sensitive adhesion tape and the semiconductor chip is temporarily fixed on the support substrate, thereafter various stacking steps are further performed to form a stacked body on the support substrate, and thereafter the stacked body including the semiconductor chip is released from the support substrate. Such a method not only allows handleability during semiconductor manufacturing to be improved, but also can allow a semiconductor device to be further decreased in thickness and increased in performance. As the method for releasing the stacked body including the semiconductor chip from the support substrate, a method including utilizing an active energy ray to weaken the adhesion force of the pressure-sensitive adhesive layer by irradiation with such an active energy ray can achieve simplification of a release step and is also industrially useful.

The pressure-sensitive adhesion tape used in an application of the semiconductor manufacturing process is demanded to not only exhibit high adhesiveness to an adherend during formation of the stacked body on the support substrate, but also be easily releasable from the support substrate during release of the stacked body including the semiconductor chip, from the support substrate. A heat treatment at a high temperature of, for example, 200°C or more may be applied in the semiconductor manufacturing process, and the pressure-sensitive adhesion tape used in the semiconductor manufacturing process is demanded to hardly cause floating and foaming even against such a heat treatment at a high temperature and be excellent in heat resistance.

The present disclosure has been made in view of the above circumstances, and one object thereof is to provide an active energy ray-curable pressure-sensitive adhesive composition capable of forming a pressure-sensitive adhesive layer which exhibits easy releasability due to irradiation with an active energy ray and which is excellent in heat resistance. Another object thereof is to provide a pressure-sensitive adhesion sheet which exhibits easy releasability due to irradiation with an active energy ray and which is excellent in heat resistance.

### Solution to Problem

The present inventors have made intensive studies in order to solve the above problems, and have focused on promotion of formation of a crosslinked structure by irradiation with an active energy ray and thus accomplishment of releasability of a pressure-sensitive adhesive layer. The inventors have found based on this focusing that, in a case where a specified structure is introduced into a polymer, a pressure-sensitive adhesive layer not only can ensure heat resistance, but also can be improved in easy releasability. Specifically, according to the present disclosure, the following active energy ray-curable pressure-sensitive adhesive composition and pressure-sensitive adhesion sheet are provided.
[1] An active energy ray-curable pressure-sensitive adhesive composition containing no a compound having two or more reactive unsaturated bonds in one molecule, and containing an acrylic pressure-sensitive adhering polymer (A) having at least one selected from the group consisting of an ether group, a hydroxyl group, aliphatic tertiary carbon, a secondary amino group and a tertiary amino group in a side chain, wherein the acrylic pressure-sensitive adhering polymer (A) includes a structural unit (U1) having a hydrogen abstraction type photopolymerization initiator structure, a content rate of the structural unit (U1) in the acrylic pressure-sensitive adhering polymer (A) is 0.1% by mass or more and 50% by mass or less relative to the entire structural unit of the acrylic pressure-sensitive adhering polymer (A), and a content of a crosslinking agent is 0 parts by mass or more and 3 parts by mass or less based on a content of the acrylic pressure-sensitive adhering polymer (A) of 100 parts by mass.
[2] The active energy ray-curable pressure-sensitive adhesive composition according to [1], wherein the acrylic pressure-sensitive adhering polymer (A) includes a structural unit (U2) derived from a (meth)acrylic monomer having at least one selected from the group consisting of an ether group, a hydroxyl group, aliphatic tertiary carbon (except for carbon atoms constituting a carbon-carbon double bond in a methacryloyl group), a secondary amino group and a tertiary amino group, and a content rate of the structural unit (U2) in the acrylic pressure-sensitive adhering polymer (A) is 10% by mass or more relative to the entire structural unit of the acrylic pressure-sensitive adhering polymer (A).
[3] The active energy ray-curable pressure-sensitive adhesive composition according to [1] or [2], wherein the acrylic pressure-sensitive adhering polymer (A) includes a structural unit derived from a monomer represented by the following formula (1):

   CH₂=CR¹-C(=O)O-(R²O)ₙ-R³ ... (1)

   wherein R¹ represents a hydrogen atom or a methyl group, R² represents a linear or branched alkylene group having 2 to 6 carbon atoms, R³ represents a hydrogen atom or a monovalent hydrocarbon group having 1 to 20 carbon atoms, and n represents an integer of 2 to 100.
[4] The active energy ray-curable pressure-sensitive adhesive composition according to any of [1] to [3], wherein a glass transition temperature of the acrylic pressure-sensitive adhering polymer (A) is -70°C or more and 0°C or less.
[5] The active energy ray-curable pressure-sensitive adhesive composition according to any of [1] to [4], wherein a weight average molecular weight of the acrylic pressure-sensitive adhering polymer (A) is 100,000 or more.
[6] The active energy ray-curable pressure-sensitive adhesive composition according to any of [1] to [5], wherein the acrylic pressure-sensitive adhering polymer (A) includes 50% by mass or more of a structural unit derived from at least one monomer selected from the group consisting of a (meth)acrylic monomer having a boiling point at atmospheric pressure of 150°C or less and a (meth)acrylic monomer having a boiling point at atmospheric pressure of 200°C or more, relative to the entire structural unit of the acrylic pressure-sensitive adhering polymer (A).
[7] The active energy ray-curable pressure-sensitive adhesive composition according to any of [1] to [6], containing the crosslinking agent.
[8] The active energy ray-curable pressure-sensitive adhesive composition according to any of [1] to [7], for a semiconductor manufacturing process.
[9] A pressure-sensitive adhesion sheet including a pressure-sensitive adhesive layer formed with the active energy ray-curable pressure-sensitive adhesive composition according to any of [1] to [8].
[10] The pressure-sensitive adhesion sheet according to [9], wherein a gel fraction based on the acrylic pressure-sensitive adhering polymer (A) in the pressure-sensitive adhesive layer before attachment with an adherend is 90% or less.
[11] The pressure-sensitive adhesion sheet according to [9] or [10], wherein a weight loss rate at 200°C in the pressure-sensitive adhesive layer, as measured by thermogravimetric measurement in conditions of a rate of temperature rise of 20°C/min and a range of temperature rise of 25 to 350°C, is 5% by weight or less.
[12] The pressure-sensitive adhesion sheet according to any of [9] to [11], wherein a ratio (S2/S1) between a release strength (S1) before the pressure-sensitive adhesion sheet attached to an adherend is irradiated with an active energy ray, and a release strength (S2) after the pressure-sensitive adhesion sheet attached to an adherend is irradiated with an active energy ray to allow a gel fraction based on the acrylic pressure-sensitive adhering polymer (A) in the pressure-sensitive adhesive layer to be more than 90% is 0.7 or less.

### Advantageous Effect of Invention

According to the present disclosure, it is possible to obtain a pressure-sensitive adhesive layer and a pressure-sensitive adhesion sheet that are each irradiated with an active energy ray and thus easily releasable from an adherend and also excellent in heat resistance.

### Brief Description of Drawings

[Figure 1] Figure 1 is a diagram illustrating one example of a pressure-sensitive adhesion sheet.
[Figure 2] Figure 2 is a diagram illustrating one example of use of the pressure-sensitive adhesion sheet.

### Description of Embodiments

Hereinafter, the present disclosure is described in detail. Herein, the "(meth)acrylic" means acrylic and/or methacrylic. The "(meth)acrylate" means acrylate and/or methacrylate.

### <<Active energy ray-curable pressure-sensitive adhesive composition>>

The active energy ray-curable pressure-sensitive adhesive composition of the present disclosure (hereinafter, also referred to as "the present composition") is a pressure-sensitive adhesive composition which contains an acrylic pressure-sensitive adhering polymer (A) having a hydrogen abstraction type photopolymerization initiator structure, which contains a crosslinking agent at a content falling within a predetermined range, and which does not contain a compound (hereinafter, also referred to as "reactive unsaturated compound") having two or more reactive unsaturated bonds in one molecule. A pressure-sensitive adhesive layer formed with the present composition, while has high adhesion force when attached with an adherend, is reduced in adhesion strength and thus exhibits easy releasability due to irradiation of the pressure-sensitive adhesive layer with an active energy ray after attachment of the pressure-sensitive adhesive layer and the adherend. Hereinafter, the acrylic pressure-sensitive adhering polymer (A) included in the present composition and any component, if necessary, compounded therein are first described.

### (Acrylic pressure-sensitive adhering polymer (A))

The acrylic pressure-sensitive adhering polymer (A) is a polymer with a (meth)acrylic monomer-derived structural unit as a main component, and has pressure-sensitive adhesiveness. Herein, the acrylic pressure-sensitive adhering polymer (A) with a (meth)acrylic monomer as a "main component" indicates that the proportion of the (meth)acrylic monomer-derived structural unit relative to the whole structural unit (hereinafter, also referred to as "the entire structural unit" or "the entire monomer unit") derived from a monomer constituting the acrylic pressure-sensitive adhering polymer (A) is preferably 50% by mass or more. The proportion of the (meth)acrylic monomer-derived structural unit is more preferably 60% by mass or more, further preferably 70% by mass or more, still further preferably 80% by mass or more from the viewpoint of an increase in pressure-sensitive adhesion force of the acrylic pressure-sensitive adhering polymer (A).

The acrylic pressure-sensitive adhering polymer (A) is a polymer having a hydrogen abstraction type photopolymerization initiator structure in a side chain, and includes a structural unit (hereinafter, also referred to as "structural unit (U1)") having a hydrogen abstraction type photopolymerization initiator structure. The hydrogen abstraction type photopolymerization initiator structure in the structural unit (U1) is a structure derived from a compound (namely, hydrogen abstraction type photopolymerization initiator) which generates a radical by hydrogen abstraction from other molecule due to irradiation with an active energy ray. Examples of the active energy ray can include ultraviolet light, visible light and an electron beam, and ultraviolet light or an electron beam is preferred.

A structure derived from a known hydrogen abstraction type radical polymerization initiator can be adopted as the hydrogen abstraction type photopolymerization initiator structure in the structural unit (U1). Specific examples of the hydrogen abstraction type photopolymerization initiator include benzophenones such as benzophenone, 2-methylbenzophenone, 3-methylbenzophenone, 4-methylbenzophenone, 2,4,6-trimethylbenzophenone, 4-phenylbenzophenone, 4-(methylphenylthio)phenylphenylmethane, methyl-2-benzophenone, 1-[4-(4-benzoylphenylsulfanyl)phenyl]-2-methyl-2-(4-methylphenylsulfonyl)propan-1-one, 4,4'-bis(dimethylamino)benzophenone, 4,4'-bis(diethylamino)benzophenone, and 4-methoxy-4'-dimethylaminobenzophenone; and thioxanthones such as thioxanthone, 2-chlorothioxanthone, 2,4-diethylthioxanthone, isopropylthioxanthone, 1-chloro-4-propylthioxanthone, 3-[3,4-dimethyl-9-oxo-9H-thioxanthon-2-yl-oxy]-2-hydroxypropyl-N,N,N-trimethylammonium chloride, and fluorothioxanthone; as well as benzil ketal, anthraquinone, ethylanthraquinone, phenanthrenequinone, xanthone, and hydroxyacetophenone. The structural unit (U1) may have any structure derived from commercially available hydrogen abstraction type photopolymerization initiators, for example, trade names OMNIPOL BP, OMNIPOL TX, OMNIPOL ASA, OMNIRAD 4PBZ, OMNIPOL 2702, OMNIPOL OMBB, OMNIPOL BMS, OMNIPOL EMK, OMNIPOL DETX, OMNIPOL ITX, OMNIPOL EDB, OMNIPOL EHA, OMNIPOL BP Flaskes, OMNIPOL 4MBZ Flaskes, and ESACURE 3644 (all are manufactured by IGM Resins B.V.).

The structural unit (U1) is, in particular, preferably a structural unit having a benzophenone backbone because the radical generation efficiency by irradiation with an active energy ray is high and heat resistance is excellent.

The structural unit (U1) can be a structural unit derived from a (meth)acrylic monomer having a hydrogen abstraction type photopolymerization initiator structure. Such a (meth)acrylic monomer is available as a commercially available product. Specific examples thereof include trade name MBP (manufactured by Shinryo Corporation.).

The content rate of the structural unit (U1) in the acrylic pressure-sensitive adhering polymer (A) is 0.1% by mass or more and 50% by mass or less relative to the entire structural unit of the acrylic pressure-sensitive adhering polymer (A). When the content rate of the structural unit (U1) is less than 0.1% by mass, there is concern that formation of a crosslinked structure by use of the acrylic pressure-sensitive adhering polymer (A) cannot be sufficiently performed in the case of irradiation with an active energy ray. Therefore, the content rate of the structural unit (U1) is preferably 0.5% by mass or more, more preferably 1% by mass or more relative to the entire structural unit of the acrylic pressure-sensitive adhering polymer (A).

In order to inhibit the pressure-sensitive adhesive layer from being embrittled due to excessive formation of a crosslinked structure by irradiation with an active energy ray, the content rate of the structural unit (U1) is preferably 40% by mass or less, more preferably 35% by mass or less, further preferably 30% by mass or less, even preferably 20% by mass or less, even more preferably 15% by mass or less relative to the entire structural unit of the acrylic pressure-sensitive adhering polymer (A). The structural unit (U1) may be used singly or in combinations of two or more kinds thereof.

The acrylic pressure-sensitive adhering polymer (A) has, together with the structural unit (U1), at least one selected from the group consisting of an ether group, a hydroxyl group, aliphatic tertiary carbon, a secondary amino group and a tertiary amino group in a side chain. It is considered that such an acrylic pressure-sensitive adhering polymer (A) is used to form a pressure-sensitive adhesive layer and the pressure-sensitive adhesive layer is irradiated with an active energy ray, thereby resulting in abstraction of hydrogen from a side chain moiety in the acrylic pressure-sensitive adhering polymer (A) and thus formation of a crosslinked structure via such a hydrogen abstraction moiety.

More specifically, a pressure-sensitive adhesive layer formed with the present composition is irradiated with an active energy ray, thereby generating a radical in the pressure-sensitive adhesive layer by a hydrogen abstraction type photopolymerization initiator structure in the structural unit (U1). This radical allows for abstraction of hydrogen from a side chain moiety (more specifically, an ether group, a C-H bond adjacent to a secondary amino group or a tertiary amino group, a hydroxyl group, or aliphatic tertiary carbon in a side chain) of the acrylic pressure-sensitive adhering polymer (A), resulting in generation of a carbon radical and/or an oxygen radical. It is considered that such radicals thus generated are mutually coupled to form a crosslinked structure. It is also considered that a dense crosslinked structure is formed in the pressure-sensitive adhesive layer due to crosslinking between side chains, thereby enabling a pressure-sensitive adhesion sheet to be reduced in adhesion strength. In other words, it is considered that the present pressure-sensitive adhesion sheet keeps high adhesion force after attachment to an adherend and before irradiation with an active energy ray and thereafter exhibits easy releasability due to the subsequent irradiation with an active energy ray and thus sufficient formation of an intermolecular or intramolecular crosslinked structure of the acrylic pressure-sensitive adhering polymer (A).

Specifically, the acrylic pressure-sensitive adhering polymer (A) preferably includes a structural unit (hereinafter, also referred to as "structural unit (U2)") derived from a (meth)acrylic monomer having at least one selected from the group consisting of an ether group, a hydroxyl group, aliphatic tertiary carbon (except for carbon atoms constituting a carbon-carbon double bond in a methacryloyl group), a secondary amino group and a tertiary amino group. Such a monomer can be used to perform polymerization, thereby easily introducing at least one selected from the group consisting of an ether group, a hydroxyl group, aliphatic tertiary carbon, a secondary amino group and a tertiary amino group into a side chain of a polymer. Herein, the "aliphatic tertiary carbon" refers to a carbon atom to which one hydrogen atom and three carbon atoms are bound, wherein at least one of such three carbon atoms bound constitutes an aliphatic hydrocarbon group. The ether group refers to a group in which one or more hydrogen atoms are directly bound to at least one of two carbon atoms bound to "-O-", in "-O-" contained in a "hydrocarbon group-O-hydrocarbon group".

Specific examples of the monomer constituting the structural unit (U2) include (meth)acrylic acid alkoxyalkyl ester, (meth)acrylic acid ester having aliphatic tertiary carbon, (meth)acrylic acid hydroxyalkyl ester, polyalkylene glycol mono(meth)acrylate, and amino group-containing (meth)acrylic acid ester.

Specific examples of the (meth)acrylic acid alkoxyalkyl ester among those described above include methoxymethyl (meth)acrylate, ethoxymethyl (meth)acrylate, methoxyethyl (meth)acrylate, ethoxyethyl (meth)acrylate, n-propoxyethyl (meth)acrylate, n-butoxyethyl (meth)acrylate, methoxypropyl (meth)acrylate, ethoxypropyl (meth)acrylate, n-propoxypropyl (meth)acrylate, n-butoxypropyl (meth)acrylate, methoxybutyl (meth)acrylate, ethoxybutyl (meth)acrylate, n-propoxybutyl (meth)acrylate, and n-butoxybutyl (meth)acrylate.

Specific examples of the (meth)acrylic acid ester having aliphatic tertiary carbon include isobutyl (meth)acrylate, 2-ethylhexyl (meth)acrylate, isooctyl (meth)acrylate, isononyl (meth)acrylate, methylcyclohexyl (meth)acrylate, tert-butylcyclohexyl (meth)acrylate, isobornyl (meth)acrylate, adamantyl (meth)acrylate, dicyclopentenyl (meth)acrylate, dicyclopentanyl (meth)acrylate, and EO-modified 2-ethylhexyl (meth)acrylate.

Specific examples of the (meth)acrylic acid hydroxyalkyl ester include 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, and 4-hydroxybutyl (meth)acrylate.

Specific examples of the polyalkylene glycol mono(meth)acrylate include a monomer represented by the following formula (1):

CH₂=CR¹-C(=O)O-(R²O)ₙ-R³ ... (1)

wherein R¹ represents a hydrogen atom or a methyl group, R² represents a linear or branched alkylene group having 2 to 6 carbon atoms, R³ represents a hydrogen atom or a monovalent hydrocarbon group having 1 to 20 carbon atoms, and n represents an integer of 2 to 100.

In the formula (1), R³ is preferably an alkyl group or an aryl group from the viewpoint of raw material availability. n is preferably 2 to 50, more preferably 2 to 30, further preferably 2 to 10.

Further specific examples of the polyalkylene glycol mono(meth)acrylate include polyethylene glycol mono(meth)acrylate, polypropylene glycol mono(meth)acrylate, polyethylene glycol-polypropylene glycol mono(meth)acrylate, polyethylene glycol-polytetraethylene glycol mono(meth)acrylate, methoxy polyethylene glycol mono(meth)acrylate, lauroxy polyethylene glycol mono(meth)acrylate, stearoxy polyethylene glycol mono(meth)acrylate, octoxy polyethylene glycol-polypropylene glycol mono(meth)acrylate, phenoxy polyethylene glycol mono(meth)acrylate, phenoxy polyethylene glycol-polypropylene glycol mono(meth)acrylate, nonylphenoxy polyethylene glycol mono(meth)acrylate, nonylphenoxy polypropylene glycol mono(meth)acrylate, and nonylphenoxy polyethylene glycol-polypropylene glycol mono (meth) acrylate. Examples of a commercially available product of the polyalkylene glycol mono(meth)acrylate include, as product names, Aronix M-101A, Aronix M-102, Aronix M-113, Aronix M-120, and Aronix M-140 (all are manufactured by Toagosei Co., Ltd.); and Blemmer PP series, Blemmer AP series, Blemmer PME series, and Blemmer AME series (all are manufactured by NOF Corporation).

Examples of the amino group-containing (meth)acrylic acid ester include dimethylaminomethyl (meth)acrylate, diethylaminomethyl (meth)acrylate, 2-dimethylaminoethyl (meth)acrylate, 2-diethylaminoethyl (meth)acrylate, 2-(di-n-propylamino)ethyl (meth)acrylate, 2-dimethylaminopropyl (meth)acrylate, 2-diethylaminopropyl (meth)acrylate, 2-(di-n-propylamino)propyl (meth)acrylate, 3-dimethylaminopropyl (meth)acrylate, 3-diethylaminopropyl (meth)acrylate, and 3-(di-n-propylamino)propyl (meth)acrylate.

The (meth)acrylic pressure-sensitive adhering polymer (A) preferably includes a structural unit derived from at least one selected from the group consisting of the (meth)acrylic acid alkoxyalkyl ester, the (meth)acrylic acid hydroxyalkyl ester, and the monomer represented by the formula (1), and more preferably includes at least a structural unit derived from the monomer represented by the formula (1), because the number of hydrogen abstraction sites is large and a crosslinked structure is easily formed by irradiation with an active energy ray.

The content rate of the structural unit (U2) in the acrylic pressure-sensitive adhering polymer (A) is preferably 10% by mass or more relative to the entire structural unit of the acrylic pressure-sensitive adhering polymer (A), from the viewpoint that a crosslinked structure is easily formed by irradiation with an active energy ray. The content rate of the structural unit (U2) is more preferably 15% by mass or more, further preferably 20% by mass or more, still further preferably 25% by mass or more relative to the entire structural unit of the acrylic pressure-sensitive adhering polymer (A). The upper limit of the content rate of the structural unit (U2) is not particularly limited, and is preferably 90% by mass or less, more preferably 85% by mass or less, further preferably 80% by mass or less, still further preferably 75% by mass or less, even preferably 70% by mass or less relative to the entire structural unit of the acrylic pressure-sensitive adhering polymer (A) from the viewpoint of an increase in pressure-sensitive adhesion performance.

The acrylic pressure-sensitive adhering polymer (A) may further include a different structural unit (hereinafter, also referred to as "any other structural unit") from the structural unit (U1) and the structural unit (U2). Examples of a monomer constituting such any other structural unit include (meth)acrylic acid alkyl ester, aliphatic cyclic ester of (meth)acrylic acid, aromatic ester of (meth)acrylic acid, epoxy group-containing (meth)acrylic acid ester, silyl group-containing (meth)acrylic acid ester, unsaturated acid anhydride, (meth)acrylamide or its derivative, nitrile group-containing (meth)acrylic acid ester, an aromatic vinyl compound and an imide group-containing vinyl compound, and unsaturated carboxylic acid.

Specific examples thereof include methyl (meth)acrylate, ethyl (meth)acrylate, isopropyl (meth)acrylate, n-propyl (meth)acrylate, n-butyl (meth)acrylate, tert-butyl (meth)acrylate, n-hexyl (meth)acrylate, n-octyl (meth)acrylate, n-nonyl (meth)acrylate, n-decyl (meth)acrylate, and lauryl (meth)acrylate.

Specific examples of the aliphatic cyclic ester of (meth)acrylic acid include cyclohexyl (meth)acrylate and cyclododecyl (meth)acrylate. Specific examples of the aromatic ester of (meth)acrylic acid include phenyl (meth)acrylate, benzyl (meth)acrylate, phenoxymethyl (meth)acrylate, 2-phenoxyethyl (meth)acrylate, and 3-phenoxypropyl (meth)acrylate.

Specific examples of the epoxy group-containing (meth)acrylic acid ester include glycidyl (meth)acrylate, 4-hydroxybutyl(meth)acrylate glycidyl ether, and 3,4-epoxycyclohexylmethyl(meth)acrylate. Specific examples of the silyl group-containing (meth)acrylic acid ester include trimethoxysilylpropyl (meth)acrylate, triethoxysilylpropyl (meth)acrylate, methyldimethoxysilylpropyl (meth)acrylate, and dimethylmethoxysilylpropyl (meth)acrylate. Specific examples of the unsaturated acid anhydride include maleic anhydride, itaconic anhydride, and citraconic acid.

Specific examples of the (meth)acrylamide or its derivative include (meth)acrylamide, tert-butyl(meth)acrylamide, N,N-dimethyl(meth)acrylamide, N,N-diethyl(meth)acrylamide, N-isopropyl(meth)acrylamide, N,N-dimethylaminopropyl(meth)acrylamide, and (meth)acryloyl morpholine.

Specific examples of the nitrile group-containing (meth)acrylic acid ester include cyanomethyl (meth)acrylate, 1-cyanoethyl (meth)acrylate, 2-cyanoethyl (meth)acrylate, 1-cyanopropyl (meth)acrylate, 2-cyanopropyl (meth)acrylate, 3-cyanopropyl (meth)acrylate, 4-cyanobutyl (meth)acrylate, 6-cyanohexyl (meth)acrylate, 2-ethyl-6-cyanohexyl (meth)acrylate, and 8-cyanooctyl (meth)acrylate.

Specific examples of the aromatic vinyl compound include styrene-based compounds such as styrene, α-methylstyrene, β-methylstyrene, vinylxylene, o-methylstyrene, m-methylstyrene, p-methylstyrene, o-ethylstyrene, m-ethylstyrene, p-ethylstyrene, p-n-butylstyrene, p-isobutylstyrene, p-t-butylstyrene, o-methoxystyrene, m-methoxystyrene, p-methoxystyrene, o-chlorostyrene, m-chlorostyrene, p-chlorostyrene, p-hydroxystyrene, m-hydroxystyrene, o-hydroxystyrene, p-isopropenylphenol, m-isopropenylphenol, o-isopropenylphenol, o-vinylbenzoic acid, m-vinylbenzoic acid, p-vinylbenzoic acid and divinylbenzene, and vinylnaphthalene.

Specific examples of the imide group-containing vinyl compound include maleimide compounds such as maleimide and an N-substituted maleimide compound; itaconimide compounds such as N-methylitaconimide, N-ethylitaconimide, N-butylitaconimide, N-octylitaconimide, N-2-ethylhexylitaconimide, N-cyclohexylitaconimide and N-laurylitaconimide; citraconimide compounds such as N-methylcitraconimide, N-ethylcitraconimide, N-butylcitraconimide, N-octylcitraconimide, N-2-ethylhexylcitraconimide, N-cyclohexylcitraconimide and N-laurylcitraconimide; and (meth)acrylimide compounds such as N-(2-(meth)acryloyloxyethyl)succinimide, N-(2-(meth)acryloyloxyethyl)maleimide, N-(2-(meth)acryloyloxyethyl)phthalimide, N-(4-(meth)acryloyloxybutyl)succinimide, N-(4-(meth)acryloyloxybutyl)maleimide and N-(4-(meth)acryloyloxybutyl)phthalimide. Such any other structural unit included in the acrylic pressure-sensitive adhering polymer (A) may be adopted singly or in combinations of two or more kinds thereof.

Specific examples of the unsaturated carboxylic acid include (meth)acrylic acid, maleic acid, fumaric acid, itaconic acid, crotonic acid, citraconic acid, cinnamic acid, and unsaturated dicarboxylic acid monoalkyl ester (monoalkyl ester of maleic acid, fumaric acid, itaconic acid, citraconic acid, or the like).

The acrylic pressure-sensitive adhering polymer (A) preferably includes a structural unit derived from (meth)acrylic acid alkyl ester from the viewpoint of an increase in pressure-sensitive adhesion performance. The monomer constituting the structural unit derived from (meth)acrylic acid alkyl ester is preferably (meth)acrylic acid alkyl ester in which the number of carbon atoms in an alkyl moiety in such (meth)acrylic acid alkyl ester is 1 to 8, more preferably (meth)acrylic acid alkyl ester in which the number of carbon atoms in the alkyl moiety is 1 to 4 from the viewpoint that the elastic modulus of the acrylic pressure-sensitive adhering polymer (A) is increased to achieve an enhancement in heat resistance.

The proportion of the structural unit derived from (meth)acrylic acid alkyl ester in the acrylic pressure-sensitive adhering polymer (A) is preferably 3% by mass or more, more preferably 5% by mass or more, further preferably 10% by mass or more relative to the entire structural unit of the acrylic pressure-sensitive adhering polymer (A) from the viewpoint of an increase in pressure-sensitive adhesion performance of the acrylic pressure-sensitive adhering polymer (A). The upper limit of the proportion of the structural unit derived from (meth)acrylic acid alkyl ester in the acrylic pressure-sensitive adhering polymer (A) is not particularly limited, and is preferably 95% by mass or less, more preferably 90% by mass or less, further preferably 80% by mass or less relative to the entire structural unit of the acrylic pressure-sensitive adhering polymer (A) from the viewpoint that crosslinking formation is allowed to be sufficiently performed by irradiation with an active energy ray.

In view of the monomer constituting the acrylic pressure-sensitive adhering polymer (A), the acrylic pressure-sensitive adhering polymer (A) preferably includes a structural unit (hereinafter, also referred to as "structural unit (W)") derived from at least one monomer selected from the group consisting of a (meth)acrylic monomer having a boiling point of 150°C or less and a (meth)acrylic monomer having a boiling point of 200°C or more from the viewpoint of suppression of foaming or peeling from the pressure-sensitive adhesive layer in the case of application of a thermal load to the present pressure-sensitive adhesion sheet. Specifically, the proportion of the structural unit (W) is preferably 30% by mass or more, more preferably 40% by mass or more, further preferably 50% by mass or more, still further preferably 60% by mass or more, even preferably 70% by mass or more, even more preferably 80% by mass or more relative to the entire structural unit of the acrylic pressure-sensitive adhering polymer (A). Herein, the boiling points of a monomer is a predicted value calculated by the scientific research information management solution (ACD/Labs) of Fujitsu Limited. Herein, the boiling point is a value under the atmospheric pressure.

The acrylic pressure-sensitive adhering polymer (A) preferably includes a structural unit (hereinafter, also referred to as "structural unit (W1)") derived from a(meth)acrylic monomer having a boiling point of 150°C or less from the viewpoint that the elastic modulus of the acrylic pressure-sensitive adhering polymer (A) is increased to achieve an enhancement in heat resistance and from the viewpoint that volatilization is easily performed in the course of production of a pressure-sensitive adhesion sheet and as a result foaming from such a pressure-sensitive adhesion sheet can be suppressed. Specifically, the proportion of the structural unit (W1) is preferably 10% by mass or more, more preferably 20% by mass or more, further preferably 30% by mass or more relative to the entire structural unit of the acrylic pressure-sensitive adhering polymer (A). In this regard, the proportion of the structural unit (W1) is preferably 80% by mass or less, more preferably 70% by mass or less, further preferably 65% by mass or less relative to the entire structural unit of the acrylic pressure-sensitive adhering polymer (A) from the viewpoint that excellent easy releasability is exhibited by irradiation with an active energy ray.

The acrylic pressure-sensitive adhering polymer (A) preferably includes a structural unit (hereinafter, also referred to as "structural unit (W2)") derived from a (meth)acrylic monomer having a boiling point of 200°C or more from the viewpoint that excellent easy releasability is exhibited by irradiation with an active energy ray and from the viewpoint that a monomer (namely, unreacted monomer) included in the pressure-sensitive adhesive layer can be inhibited from being volatilized in the case of application of a thermal load. Specifically, the proportion of the structural unit (W2) is preferably 10% by mass or more, more preferably 20% by mass or more, further preferably 30% by mass or more relative to the entire structural unit of the acrylic pressure-sensitive adhering polymer (A). The proportion of the structural unit (W2) is preferably 80% by mass or less, more preferably 70% by mass or less, further preferably 65% by mass or less relative to the entire structural unit of the acrylic pressure-sensitive adhering polymer (A) from the viewpoint of an increase in pressure-sensitive adhesion performance.

In production of the acrylic pressure-sensitive adhering polymer (A), a monomer (hereinafter, also referred to as "crosslinkable group-containing monomer") having a crosslinkable functional group may be used to allow the acrylic pressure-sensitive adhering polymer (A) to include a structural unit having a crosslinkable functional group. The structural unit having a crosslinkable functional group can be introduced into the acrylic pressure-sensitive adhering polymer (A), to facilitate adjustment of the gel fraction in the pressure-sensitive adhesive layer.

The crosslinkable group-containing monomer used in production of the acrylic pressure-sensitive adhering polymer (A) is not particularly limited. The crosslinkable group-containing monomer is preferably at least one selected from the group consisting of (meth)acrylic acid, a (meth)acrylic acid hydroxyalkyl compound, an epoxy group-containing (meth)acrylic acid ester compound, and a reactive silyl group-containing (meth)acrylic acid ester compound. Among them, in particular, at least one selected from the group consisting of (meth)acrylic acid and a (meth)acrylic acid hydroxyalkyl compound is preferred, and at least one selected from the group consisting of (meth)acrylic acid and a (meth)acrylic acid hydroxyalkyl compound having a hydroxyalkyl group having 2 to 8 carbon atoms is more preferred because the pressure-sensitive adhesion force of the acrylic pressure-sensitive adhering polymer (A) tends to be able to be increased.

In a case where the structural unit having a crosslinkable functional group is introduced into the acrylic pressure-sensitive adhering polymer (A), the content rate of the structural unit having a crosslinkable functional group is preferably 0.1% by mass or more, more preferably 0.5% by mass or more, further preferably 1% by mass or more relative to the entire structural unit of the acrylic pressure-sensitive adhering polymer (A). The content rate of the structural unit having a crosslinkable functional group in the acrylic pressure-sensitive adhering polymer (A) can be set to 0.1% by mass or more, thereby resulting in proper formation of a crosslinked structure and thus suppression of flowage of the pressure-sensitive adhesive layer. The upper limit of the content rate of the structural unit having a crosslinkable functional group in the acrylic pressure-sensitive adhering polymer (A) is not particularly limited, and is preferably 30% by mass or less, more preferably 20% by mass or less, further preferably 15% by mass or less, particularly preferably 10% by mass or less relative to the entire structural unit of the acrylic pressure-sensitive adhering polymer (A) from the viewpoint that pressure-sensitive adhesion performance of the pressure-sensitive adhesive layer is ensured.

### · Production of acrylic pressure-sensitive adhering polymer (A)

The acrylic pressure-sensitive adhering polymer (A) is not particularly limited in terms of the production method thereof, and can be obtained by a known production method. For example, the acrylic pressure-sensitive adhering polymer (A) can be obtained by polymerizing the monomer with a known radical polymerization method such as a solution polymerization method, a suspension polymerization method, an emulsion polymerization method, or bulk polymerization.

Examples of the production method in the case of the solution polymerization method include a method including loading an organic solvent and a monomer to a reactor, adding a polymerization initiator thereto, and heating them to 50 to 300°C to perform polymerization.

The method for loading each raw material including a monomer may be batch-type collective loading at the initial stage, involving collectively loading the entire raw material, may be semi-continuous loading involving continuously feeding at least one portion of such a raw material into a reactor, or may be a continuous polymerization system involving continuously feeding the entire raw material and simultaneously continuously extracting a resin generated, from a reactor.

Examples of the organic solvent used in the solution polymerization method can include cyclic ethers such as tetrahydrofuran and dioxane, aromatic hydrocarbon compounds such as benzene, toluene and xylene, esters such as ethyl acetate and butyl acetate, ketones such as acetone, methyl ethyl ketone and cyclohexanone, methyl ortho-formate, methyl ortho-acetate, and alcohols such as methanol, ethanol, and isopropanol. The organic solvent used here can be one, or two or more of the above solvents. The amount of the organic solvent used is, for example, an amount so that the total amount of the monomer used in polymerization is 1 to 50% by mass based on the total amount of the organic solvent and the monomer.

The polymerization initiator used here can be a known radical polymerization initiator such as an azo-based compound, organic peroxide, or inorganic peroxide, and is not particularly limited. Among them, an azo-based compound is preferred because it is easily handled in terms of safety and hardly causes a side reaction during radical polymerization. An azo-based compound is preferred. The polymerization initiator used here may be a known redox-type polymerization initiator including an oxidant and a reductant. Furthermore, a known chain transfer agent can also be used in combination with the polymerization initiator.

Specific examples of the polymerization initiator include, as azo-based compounds, 2,2'-azobis(isobutyronitrile), 2,2'-azobis(2-methylbutyronitrile), 2,2'-azobis(2,4-dimethylvaleronitrile), 4,4'-azobis(4-cyanovaleric acid), 2-(tert-butylazo)-2-cyanopropane, 2,2'-azobis(2,4,4-trimethylpentane), 2,2'-azobis(2-methylpropane), and dimethyl 2,2'-azobis(2-methyl propionate).

Examples of the organic peroxide include cyclohexanone peroxide, 3,3,5-trimethylcyclohexanone peroxide, 1,1-bis(tert-butylperoxy)-3,3,5-trimethylcyclohexane, 2,5-dimethyl-2,5-di(tert-butylperoxy) hexane, diisopropylbenzene peroxide, and 2,5-dimethyl-2,5-di(benzoylperoxy)hexane.

Examples of the inorganic peroxide include potassium persulfate and sodium persulfate. Examples of the redox-type polymerization initiator include one with sodium sulfite, sodium thiosulfate, sodium formaldehydesulfoxylate, ascorbic acid, ferrous sulfate or the like as a reductant and potassium peroxodisulfate, hydrogen peroxide, tert-butyl hydroperoxide or the like as an oxidant. When the acrylic pressure-sensitive adhering polymer (A) is produced, the amount of the polymerization initiator used is, for example, 0.01 to 20 parts by mass based on 100 parts by mass of the entire monomer used in polymerization.

### · Glass transition temperature

The glass transition temperature (Tg) of the acrylic pressure-sensitive adhering polymer (A) preferably falls within a range of -80°C or more and 10°C or less. A case where the Tg of the acrylic pressure-sensitive adhering polymer (A) is -80°C or more is preferred because the pressure-sensitive adhesive layer can be sufficiently increased in aggregation force and adhesiveness can be sufficiently ensured. The Tg of the acrylic pressure-sensitive adhering polymer (A) is more preferably -70°C or more, further preferably -60°C or more, still further preferably -55°C or more from the viewpoint of an increase in adhesiveness of the pressure-sensitive adhesive layer.

In this regard, a case where the Tg of the acrylic pressure-sensitive adhering polymer (A) is 10°C or less is preferred because a pressure-sensitive adhesion sheet favorable in followability to an adherend can be obtained. The upper limit of the Tg of the acrylic pressure-sensitive adhering polymer (A) is more preferably 5°C or less, further preferably 0°C or less, still further preferably -5°C or less, particularly preferably -10°C or less. A preferred range of the Tg of the acrylic pressure-sensitive adhering polymer (A) is more preferably a range of -80°C or more and 5°C or less, further preferably a range of -70°C or more and 0°C or less.

Herein, the Tg of a polymer is a value determined from the intersection point between the baseline and the tangent point at the inflection point in a thermal flux curve obtained with a differential scanning calorimeter (DSC). The details of measurement conditions follow the description in Examples described below. The Tg of a polymer can be arbitrarily selected by the changes in type, compositional ratio, and the like of a constituent monomer.

### · Molecular weight characteristics

The weight average molecular weight (Mw) of the acrylic pressure-sensitive adhering polymer (A) is preferably 100,000 or more from the viewpoint that sufficient aggregation force and favorable adhesiveness are allowed to be exhibited. In a case where the Mw of the acrylic pressure-sensitive adhering polymer (A) is 100,000 or more, sufficient adhesiveness and solvent resistance can be ensured. The Mw of the acrylic pressure-sensitive adhering polymer (A) is more preferably 120,000 or more, further preferably 150,000 or more, still further preferably 200,000 or more.

The upper limit of the Mw of the acrylic pressure-sensitive adhering polymer (A) is not particularly limited, and is preferably 3,000,000 or less, more preferably 2,000,000 or less, further preferably 1,500,000 or less from the viewpoint that favorable coatability and handleability are ensured and furthermore easiness of production is ensured during formation of a pressure-sensitive adhesion sheet. The range of the Mw of the acrylic pressure-sensitive adhering polymer (A) is preferably 100,000 or more and 3,000,000 or less, more preferably 150,000 or more and 2,000,000 or less, further preferably 200,000 or more and 1,500,000 or less. Herein, the molecular weight of a polymer is a value in terms of polystyrene, as measured with gel permeation chromatography (GPC).

The molecular weight distribution (Mw/Mn) represented as the ratio of the Mw to the number average molecular weight (Mn) of the acrylic pressure-sensitive adhering polymer (A) is preferably 10.0 or less, more preferably 9.0 or less from the viewpoint that favorable adhesiveness is easily obtained and from the viewpoint that an increase in viscosity of the pressure-sensitive adhesive composition is suppressed. The lower limit of the Mw/Mn of the acrylic pressure-sensitive adhering polymer (A) is not particularly limited, and can be 1.0 or more. Herein, the Mw and the Mn of a polymer are each a value in terms of standard polystyrene, as obtained with gel permeation chromatography (GPC).

### (Reactive unsaturated compound)

The present composition does not substantially contain a compound having two or more reactive unsaturated bonds in one molecule (reactive unsaturated compound). The reactive unsaturated compound has two or more unsaturated bonds (specifically, carbon-carbon unsaturated bonds) reactive by irradiation with an active energy ray, in one molecule, and thus such reactive unsaturated compounds are reacted during active energy ray irradiation, thereby forming a crosslinked structure in the pressure-sensitive adhesive layer. Examples of the reactive unsaturated compound include a compound having two or more carbon-carbon unsaturated bonds in its molecule, and specific examples thereof include a polyfunctional (meth)acrylic compound and a polyfunctional vinyl compound. In a case where the reactive unsaturated compound is further compounded in the present composition, a pressure-sensitive adhesion sheet including a pressure-sensitive adhesive layer formed with this composition, when subjected to application of a thermal load (for example, about 200°C), thus causes progression of the reaction of the reactive unsaturated compound and formation of a crosslinked structure in the pressure-sensitive adhesive layer, thereby leading to an undesired reduction in strength of the pressure-sensitive adhesive layer or a reduction in heat resistance due to volatilization of the reactive unsaturated compound itself. It is herein noted that the "containing no the reactive unsaturated compound" does not exclude inclusion of a trace amount of the reactive unsaturated compound in the present composition to such an extent that the reactive unsaturated compound does not impair the effects of the present disclosure. Specifically, the content of the reactive unsaturated compound in the present composition is preferably 0.2% by mass or less, more preferably 0.1% by mass or less, further preferably 0.05% by mass or less based on the total amount of the present composition.

The present composition is different from a so-called syrup-type active energy ray-curable pressure-sensitive adhesive composition in that the present composition does not contain the reactive unsaturated compound. The syrup-type active energy ray-curable pressure-sensitive adhesive composition here contains a polymer component which serves to constitute one portion of the acrylic pressure-sensitive adhering polymer in the pressure-sensitive adhesive layer, and a monomer component which serves to constitute the balance, and the active energy ray-curable pressure-sensitive adhesive composition is irradiated with an active energy ray to generate the acrylic pressure-sensitive adhering polymer as a main constituent component of the pressure-sensitive adhesive layer. At least one of monomer components contained in the syrup-type active energy ray-curable pressure-sensitive adhesive composition corresponds to the "reactive unsaturated compound" in the present disclosure.

### (Other component(s))

The present composition may further contain a component (hereinafter, also referred to as "other component(s)") different from the acrylic pressure-sensitive adhering polymer (A) as long as the effects of the present disclosure are not impaired. Examples of such other component(s) include a hydrogen abstraction type photopolymerization initiator, a solvent, a crosslinking agent, a tackifier, and a plasticizer.

### · Hydrogen abstraction type photopolymerization initiator

A hydrogen abstraction type photopolymerization initiator may be compounded separately from the acrylic pressure-sensitive adhering polymer (A), in the present composition, in order to further increase the crosslinking formation efficiency in the pressure-sensitive adhesive layer. The hydrogen abstraction type photopolymerization initiator used here can be a known hydrogen abstraction type radical polymerization initiator. Specific examples of the hydrogen abstraction type photopolymerization initiator include those that are the same as specific examples and commercially available products of the hydrogen abstraction type photopolymerization initiator, as exemplified in the description of the structural unit (U1).

The content of the hydrogen abstraction type photopolymerization initiator in the present composition is preferably 30 parts by mass or less based on 100 parts by mass of the acrylic pressure-sensitive adhering polymer (A). The amount of the hydrogen abstraction type photopolymerization initiator is more preferably 20 parts by mass or less, further preferably 15 parts by mass or less based on 100 parts by mass of the acrylic pressure-sensitive adhering polymer (A) from the viewpoint that the pressure-sensitive adhesive layer is inhibited from being embrittled due to excessive formation of a crosslinked structure by irradiation with an active energy ray. The hydrogen abstraction type photopolymerization initiator may be used singly or in combinations of two or more kinds thereof.

### · Solvent

The present composition is preferably a solvent-type pressure-sensitive adhesive composition further containing a solvent. The solvent contained in the present composition is preferably an organic solvent that can dissolve the acrylic pressure-sensitive adhering polymer (A). Specific examples of the organic solvent include an aprotic polar solvent, a phenol-based solvent, an alcohol-based solvent, an ester-based solvent, a ketone-based solvent, an ether-based solvent, and a hydrocarbon-based solvent. The organic solvent may be one, or a mixed solvent of the above. The solvent included in the present composition is preferably at least one selected from the group consisting of ethyl acetate, butyl acetate, ethyl methyl ketone and toluene.

### · Crosslinking agent

In a case where the acrylic pressure-sensitive adhering polymer (A) has a crosslinkable functional group, a crosslinking agent (curing agent) reactive with the crosslinkable functional group may be compounded in the present composition to easily adjust the gel fraction in a pressure-sensitive adhesive layer formed with the present composition. Examples of the crosslinkable functional group include a hydroxyl group and a carboxyl group, and a hydroxyl group is preferred. The crosslinking agent used here is a compound not having a reactive unsaturated bond, and specific examples include a glycidyl-based compound having two or more glycidyl groups, an isocyanate-based compound having two or more isocyanate groups, an aziridine-based compound having two or more aziridinyl groups, an oxazoline-based compound having an oxazoline group, a metal chelate compound, and a butylated melamine compound. Among them, an isocyanate-based compound is preferred from the viewpoint that a pressure-sensitive adhesive layer higher in aggregation force can be formed.

Specific examples of the glycidyl-based compound as the crosslinking agent include polyfunctional glycidyl compounds such as ethylene glycol diglycidyl ether, polyethylene glycol diglycidyl ether, propylene glycol diglycidyl ether, polypropylene glycol diglycidyl ether, 1,6-hexanediol diglycidyl ether, tetraglycidylxylenediamine, 1,3-bis(N,N-diglycidylaminomethyl)cyclohexane, and trimethylolpropane polyglycidyl ether.

Examples of the isocyanate-based compound include aromatic isocyanate-based compounds such as diphenylmethane diisocyanate (MDI), tolylene diisocyanate (TDI), naphthalene diisocyanate (NDI), p-phenylene diisocyanate (PPDI), xylene diisocyanate (XDI), tetramethylxylylene diisocyanate (TMXDI), and tolidine diisocyanate (TODI); aliphatic isocyanate-based compounds such as hexamethylene diisocyanate (HDI) and lysine diisocyanate (LDI); alicyclic isocyanate-based compounds such as isophorone diisocyanate (IPDI), cyclohexyl diisocyanate (CHDI), hydrogenated XDI (H6XDI), and hydrogenated MDI (H12MDI); and modified isocyanate-based compounds such as a urethane-modified product, a dimer, a trimer, a carbodiimide-modified product, a urea-modified product, an isocyanurate-modified product, an oxazolidone-modified product, and an isocyanate group-terminated prepolymer.

Examples of the aziridine-based compound include 1,6-bis(1-aziridinylcarbonylamino)hexane, 1,1'-(methylene-di-p-phenylene)bis-3,3-aziridyl urea, ethylene bis-(2-aziridinyl propionate), 2,4,6-triaziridinyl-1,3,5-triazine, and trimethylolpropane-tris(2-aziridinyl propionate).

The content of the crosslinking agent in the present composition is preferably 0 to 5 parts by mass, more preferably 0 to 3 parts by mass, further preferably 0 to 2 parts by mass, even preferably 0 to 1 part by mass, even more preferably 0 to 0.8 parts by mass based on a content of the acrylic pressure-sensitive adhering polymer (A) of 100 parts by mass from the viewpoint of improvements in pressure-sensitive adhesion performance and followability of a pressure-sensitive adhesive layer formed with the present composition in a well-balanced manner.

### · Tackifier

The present composition may further contain a tackifier. Examples of the tackifier include rosin derivatives such as rosin ester, gum rosin, tall oil rosin, hydrogenated rosin ester, maleinated rosin, and disproportionated rosin ester; a terpene-based resin mainly containing a terpene phenol resin, α-pinene, β-pinene, limonene, or the like; a coumarone-indene-based resin, a hydrogenated aromatic copolymer, and a phenol-based resin. The tackifier may be used singly or in combinations of two or more kinds thereof. The content of the tackifier is preferably 0 to 20 parts by mass, more preferably 0 to 10 parts by mass, further preferably 0 to 5 parts by mass based on 100 parts by mass of the acrylic pressure-sensitive adhering polymer (A).

### · Plasticizer

A plasticizer may be compounded in the present composition. Examples of the plasticizer include phthalates such as di-n-butyl phthalate, di-n-octyl phthalate, bis(2-ethylhexyl)phthalate, and di-n-decyl phthalate; apipates such as bis(2-ethylhexyl)adipate and di-n-octyl adipate; sebacates; azelates; paraffins such as chlorinated paraffin; glycols such as polypropylene glycol; epoxy-modified vegetable oils such as epoxidized soybean oil and epoxidized linseed oil; phosphates such as trioctyl phosphate and triphenyl phosphate; phosphites such as triphenyl phosphite; ester oligomers such as an esterified product of adipic acid and 1,3-butylene glycol; low-molecular-weight polymers such as low-molecular-weight polybutene, low-molecular-weight polyisobutylene, and low-molecular-weight polyisoprene; and oils such as process oil and naphthene-based oil.

The content of the plasticizer is preferably 0 to 20 parts by mass, more preferably 0 to 10 parts by mass, further preferably 0 to 5 parts by mass based on 100 parts by mass of the acrylic pressure-sensitive adhering polymer (A).

Examples of other additive(s) compounded in the present composition include an intramolecular cleavage-type photopolymerization initiator, an antioxidant, an ultraviolet absorber, an anti-aging agent, a flame retardant, a mildew-proofing agent, a silane coupling agent, a filler, and a colorant. The content of such additive(s) can be appropriately set depending on various compounds as long as the effects of the present disclosure are not impaired.

In a case where the present composition is a solvent-type composition, the solid content concentration in the pressure-sensitive adhesive composition (namely, the proportion of the mass of components other than the solvent in the pressure-sensitive adhesive composition based on the entire mass of the pressure-sensitive adhesive composition) is not particularly limited, and is preferably 1 to 70% by mass. In a case where the solid content concentration is 1% by mass or more, a pressure-sensitive adhesive layer having a sufficient thickness can be formed. In a case where the solid content concentration is 70% by mass or less, favorable coatability can be ensured and a pressure-sensitive adhesive layer having a uniform thickness is easily formed. The solid content concentration in the present composition is more preferably 5 to 50% by mass, further preferably 10 to 45% by mass.

The viscosity of the present composition is preferably 500 to 10,000 mPa·s. In a case where the viscosity is 10,000 mPa·s or less, favorable coatability can be ensured. In addition, the composition can be directly used without dilution to a suitable viscosity for coating during coating, and is favorable in handleability. The viscosity of the present composition is more preferably 8,000 mPa·s or less, further preferably 6,000 mPa·s or less from such viewpoints. The lower limit of the viscosity of the present composition is more preferably 1,000 mPa·s or more, further preferably 1,500 mPa·s or more from the viewpoint that the thickness is inhibited from being too small. The viscosity of the pressure-sensitive adhesive composition is a value obtained by subjecting a pressure-sensitive adhesive composition having a solid content concentration of 25% to measurement at 25°C with a B-type viscometer.

### <<Pressure-sensitive adhesion sheet>>

The pressure-sensitive adhesion sheet of the present disclosure (hereinafter, also referred to as "the present pressure-sensitive adhesion sheet".) includes a pressure-sensitive adhesive layer formed with the active energy ray-curable pressure-sensitive adhesive composition containing the acrylic pressure-sensitive adhering polymer (A).

The pressure-sensitive adhesive layer in the present pressure-sensitive adhesion sheet can be formed by coating a separator or the like with the present composition, and, if necessary, performing a drying treatment. The separator used here can be any of resin films made of various resin materials. Examples of the resin material constituting the resin film include a polyester-based resin such as polyethylene terephthalate, a polyether sulfone-based resin, an acetate-based resin, a polycarbonate-based resin, and a polyolefin-based resin.

In a case where the pressure-sensitive adhesive layer is formed with a solvent-type pressure-sensitive adhesive composition, such formation is performed by first coating a separator with the present composition according to a known coating method, and removing the solvent preferably by a drying treatment such as heating. The heating temperature and the heating time during formation of the pressure-sensitive adhesive layer are not limited as long as the solvent can be removed, and can be appropriately set depending on the type of the solvent included in the present composition, the solid content concentration, and the like. The thickness of the pressure-sensitive adhesive layer is, for example, 2 to 150 µm, preferably 2 to 100 µm, more preferably 2 to 75 µm. The pressure-sensitive adhesive layer may also be formed by stacking a plurality of thin films in order to allow the pressure-sensitive adhesive layer to have a desired thickness.

In the process for forming the present pressure-sensitive adhesion sheet, the pressure-sensitive adhesive layer after coating of a separator or the like with the present composition and, if necessary, removal of the solvent may be subjected to pre-crosslinking by irradiation with an active energy ray. Herein, the amount of irradiation with an active energy ray, or the like, in the treatment for irradiation with an active energy ray in the process for producing the present pressure-sensitive adhesion sheet is preferably appropriately set so that the gel fraction based on the acrylic pressure-sensitive adhering polymer (A) in the pressure-sensitive adhesive layer is 90% or less, preferably 80% or less, more preferably 70% or less.

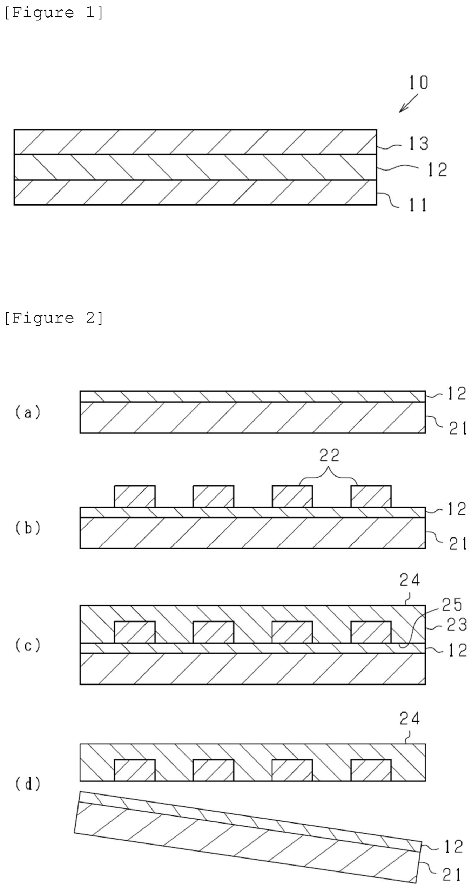

One aspect of the present pressure-sensitive adhesion sheet, thus obtained, is a so-called base material-less aspect in which the pressure-sensitive adhesive layer is sandwiched between two separators that are the same or different in terms of release strength, for example, as illustrated in Figure 1. A pressure-sensitive adhesion sheet 10 in Figure 1 is a stacked body in which a first separator 11, a pressure-sensitive adhesive layer 12, and a second separator 13 are stacked in the listed order. The first separator 11 and the second separator 13 are preferably different in releasability. For example, the first separator 11 may be a heavily releasable film and the second separator 13 may be a lightly releasable film.

The present pressure-sensitive adhesion sheet may have a configuration in which a base material is disposed on one surface of the pressure-sensitive adhesive layer and a separator is disposed on the other surface thereof. The shape of the pressure-sensitive adhesion sheet is not particularly limited, and can be appropriately set depending on the usage mode. The pressure-sensitive adhesion sheet may be, for example, in the form of a sheet or a roll, or may be cut into a strip. The pressure-sensitive adhesion sheet may have any shape depending on the position of adhesion. One aspect of the present pressure-sensitive adhesion sheet is a pressure-sensitive adhesion tape.

### <Physical properties of pressure-sensitive adhesive layer>

### · Gel fraction

The gel fraction based on the acrylic pressure-sensitive adhering polymer (A) in the pressure-sensitive adhesive layer of the present pressure-sensitive adhesion sheet before attachment with an adherend (namely, before use of the present pressure-sensitive adhesion sheet) is preferably in a range of 90% or less. The gel fraction in the pressure-sensitive adhesive layer of the pressure-sensitive adhesion sheet before attachment with an adherend can be set to 90% or less, to allow adhesion force of the pressure-sensitive adhesive layer to be sufficiently ensured. In a case where the pressure-sensitive adhesive layer is attached to an adherend and then the pressure-sensitive adhesive layer is irradiated with an active energy ray, the difference in release strength before and after irradiation with an active energy ray can be ensured and easy releasability of the pressure-sensitive adhesive layer can be improved.

The gel fraction in the pressure-sensitive adhesive layer of the pressure-sensitive adhesion sheet before attachment with an adherend is more preferably 85% or less, further preferably 80% or less, even preferably 75% or less from the viewpoint that a pressure-sensitive adhesion sheet not only ensuring adhesiveness before irradiation with an active energy ray and easy releasability after irradiation with an active energy ray after attachment with an adherend, but also having excellent heat resistance is obtained.

The lower limit of the gel fraction in the pressure-sensitive adhesive layer of the pressure-sensitive adhesion sheet before attachment with an adherend is not particularly limited. The gel fraction in the pressure-sensitive adhesive layer of the pressure-sensitive adhesion sheet before attachment with an adherend is preferably 1% or more, more preferably 3% or more, further preferably 4% or more from the viewpoint that a pressure-sensitive adhesion sheet not only ensuring adhesiveness before irradiation with an active energy ray and easy releasability after irradiation with an active energy ray after attachment with an adherend, but also having excellent heat resistance is obtained. A preferred range of the gel fraction in the pressure-sensitive adhesive layer of the pressure-sensitive adhesion sheet before attachment with an adherend can be determined by appropriately combining the upper limit value and the lower limit value. Specifically, the range is more preferably 1 to 90%, further preferably 2 to 85%, still further preferably 4 to 80%. The detail of the measurement method follows a method described in Examples later.

### · Weight loss rate

The weight loss rate at 200°C in the pressure-sensitive adhesive layer of the present pressure-sensitive adhesion sheet, as measured in conditions of a rate of temperature rise of 20°C/min and a range of temperature rise of 25 to 350°C according to thermogravimetric measurement, is preferably 5% by weight or less. In a case where the weight loss rate is 5% by weight or less, volatilization of any component from the pressure-sensitive adhesive layer hardly occurs in the case of application of a thermal load to the present pressure-sensitive adhesion sheet, and a pressure-sensitive adhesion sheet can be obtained which is suppressed in foaming and floating due to such a thermal load and which is high in heat resistance. The weight loss rate measured in the above conditions is more preferably 4% by weight or less, further preferably 3% by weight or less from the viewpoint of an increase in heat resistance of the pressure-sensitive adhesion sheet. Herein, the method for measuring the weight loss rate in the pressure-sensitive adhesive layer by thermogravimetric measurement follows a method described in Examples below.

### . Release strength

The present pressure-sensitive adhesion sheet is reduced in adhesion strength and thus exhibits easy releasability, by attaching the pressure-sensitive adhesive layer and an adherend and then irradiating these with an active energy ray to perform crosslinking or further crosslinking of the acrylic pressure-sensitive adhering polymer (A). In a case where the adhesion strength before irradiation of the present pressure-sensitive adhesion sheet (preferably, pressure-sensitive adhesion sheet in which the gel fraction in the pressure-sensitive adhesive layer is 90% or less) attached to an adherend, with an active energy ray, and the adhesion strength after irradiation of the present pressure-sensitive adhesion sheet attached to the adherend, with an active energy ray, are compared, the adhesion strength before active energy ray irradiation is high, and thus peeling from the adherend is preferably suppressed. In this regard, the adhesion strength after irradiation with an active energy ray is preferably lower than that before active energy ray irradiation from the viewpoint that easy releasability by irradiation with an active energy ray is realized.

Specifically, in a case where a release strength before the present pressure-sensitive adhesion sheet (preferably, pressure-sensitive adhesion sheet in which the gel fraction in the pressure-sensitive adhesive layer is 90% or less) attached to an adherend is irradiated with an active energy ray of is designated as "S1", and a release strength after the present pressure-sensitive adhesion sheet attached to the adherend is irradiated with an active energy ray to allow the gel fraction based on the acrylic pressure-sensitive adhering polymer (A) in the pressure-sensitive adhesive layer to be more than 90% is designated as "S2", and a ratio (S2/S1) is used as an index, the ratio (S2/S1) is preferably 0.7 or less. The ratio (S2/S1) is more preferably 0.65 or less, further preferably 0.6 or less, still further preferably 0.5 or less because adhesiveness before irradiation with an active energy ray and easy releasability after irradiation with an active energy ray can be further increased. Herein, the release strength is a value measured according to JIS Z-0237. The detail of the measurement method follows a method described in Examples below.

### <Use of pressure-sensitive adhesion sheet>

The present pressure-sensitive adhesion sheet hardly causes foaming or floating from an adherend even by heating at a high temperature (for example, 200°C or more), and is excellent in heat resistance. Accordingly, the present pressure-sensitive adhesion sheet is suitable as a pressure-sensitive adhesion sheet to be used in a semiconductor manufacturing process (namely, a pressure-sensitive adhesion sheet for a semiconductor manufacturing process). The present pressure-sensitive adhesion sheet is attached to an adherend and then irradiated with an active energy ray, and thus exhibits easy releasability. The present pressure-sensitive adhesion sheet is used for the purpose of temporary fixation of an adherend or protection of an adherend surface in a semiconductor manufacturing process, and is suitable for an application in which the pressure-sensitive adhesive layer is demanded to be released by irradiation of the pressure-sensitive adhesive layer with an active energy ray at the time where temporary fixation and surface protection by the pressure-sensitive adhesive layer are made unnecessary.

For example, a semiconductor manufacturing process according to a FOWLP technology or a three-dimensional stacked semiconductor (3D-IC) technology may include attaching a pressure-sensitive adhesion tape on a support substrate (for example, glass substrate), placing a semiconductor chip on a pressure-sensitive adhesive layer of the pressure-sensitive adhesion tape attached on the support substrate to temporarily fix the semiconductor chip on the support substrate, then further performing various stacking steps to form a stacked body on the support substrate, and then releasing the support substrate and the pressure-sensitive adhesive layer. The present pressure-sensitive adhesion sheet can be preferably applied as the pressure-sensitive adhesion tape in such a manufacturing process.

Examples of the active energy ray for irradiation of the present pressure-sensitive adhesion sheet in release of the present pressure-sensitive adhesion sheet can include ultraviolet light, visible light, and an electron beam. Among them, ultraviolet light or an electron beam is preferred. The energy of active energy ray irradiation can be appropriately set depending on the type of the active energy ray, the compositional ratio of compounding in the pressure-sensitive adhesive layer, and the like.

For example, in a case where ultraviolet light is used as the active energy ray, the wavelength is, for example, 250 to 400 nm. Examples of an ultraviolet light irradiation apparatus include a high-pressure mercury lamp, a metal halide lamp, an ultraviolet electrodeless lamp, and an ultraviolet light-emitting diode (UV-LED). The accumulated amount of ultraviolet light at a wavelength of 365 nm is preferably 500 mJ/cm² or more, more preferably 1,000 mJ/cm² or more, further preferably 1,500 mJ/cm² or more. The upper limit of the accumulated amount of light is preferably 100,000 mJ/cm² or less, more preferably 50,000 mJ/cm² or less from the viewpoint of suppression of the influence on each component in the pressure-sensitive adhesive layer as much as possible and from the viewpoint of a reduction in energy.

The illuminance and the irradiation time of ultraviolet light can be appropriately set so that the accumulated amount of light is a desired amount. For example, the illuminance of ultraviolet light at a wavelength of 365 nm is preferably 1.0 mW/cm² or more, more preferably 2.0 mW/cm² or more, further preferably 3.0 mW/cm² or more. The upper limit of the illuminance is preferably 3,000 mW/cm² or less, more preferably 2,000 mW/cm² or less, further preferably 1,000 mW/cm² or less.

In a case where an electron beam is used as the active energy ray, the electron beam irradiation apparatus is not particularly limited, and examples thereof include Cockcroft-Walton type, Van de Graaff type, and resonance transformer type apparatuses. The dose of absorption of the electron beam is preferably 1 to 200 kGy, more preferably 10 to 100 kGy. The accelerating voltage of the electron beam may be appropriately set in a range of 80 to 300 kV depending on the thickness of a base material. The concentration of oxygen in an electron beam irradiation atmosphere is preferably 500 ppm or less, more preferably 300 ppm or less.

Figure 2 illustrates one example of a case where a stacked body is produced with the present pressure-sensitive adhesion sheet in a semiconductor manufacturing process. A case is here described where a semiconductor sealing body including a semiconductor chip and a sealing layer is produced as the stacked body.

First, the first separator 11 is released from the pressure-sensitive adhesion sheet 10 illustrated in Figure 1, and the pressure-sensitive adhesion sheet 10 is attached on a glass substrate 21 so that a surface of the pressure-sensitive adhesive layer 12 of the pressure-sensitive adhesion sheet 10 and a surface of the glass substrate 21 are contacted. Thereafter, the second separator 13 is released to expose the surface of the pressure-sensitive adhesive layer 12 (see Figure 2(a)). Subsequently, a semiconductor chip 22 is placed on the pressure-sensitive adhesive layer 12, and the semiconductor chip 22 is temporarily fixed onto the glass substrate 21 (see Figure 2(b)). Furthermore, a sealing layer 23 is formed so as to cover the surface of the glass substrate 21 and the semiconductor chip 22. Thus, a semiconductor sealing body 24 is obtained where the semiconductor chip 22 is sealed with the sealing layer 23 on the glass substrate 21 (see Figure 2(c)). The material forming the sealing layer 23 is not particularly limited, and, for example, an epoxy resin is used.

Thereafter, a stacked body of the glass substrate 21 and the semiconductor sealing body 24 is irradiated with an active energy ray. Thus, adhesion strength of the pressure-sensitive adhesive layer 12 can be reduced to release the semiconductor sealing body 24 from the glass substrate 21 at an interface 25 between the semiconductor sealing body 24 and the pressure-sensitive adhesive layer 12 (see Figures 2(c) and (d)).

### Examples

Hereinafter, the present disclosure is specifically described with reference to Examples. It is noted that the present disclosure is not limited to these Examples. Hereinafter, "part(s)" and "%" respectively mean "part(s) by mass" and "% by mass", unless particularly noted. Analysis methods of polymers used in Examples and Comparative Examples are as follows.

### <Measurement of molecular weight>

The number average molecular weight (Mn) and the weight average molecular weight (Mw) in terms of polystyrene were obtained in the following conditions with a gel permeation chromatography apparatus (model name "HLC-8320", manufactured by Tosoh Corporation). The molecular weight distribution (Mw/Mn) was calculated from the resulting values.

### · Measurement conditions

Column: TSKgel SuperMultipore HZ-M × 4, manufactured by Tosoh Corporation
Column temperature: 40°C
Eluent: tetrahydrofuran
Detector: RI
Flow rate: 600 µL/min

### <Measurement of glass transition temperature (Tg)>

The glass transition temperature (Tg) of a polymer was determined from the intersection point between the baseline and the tangent point at the inflection point in a thermal flux curve obtained with a differential scanning calorimeter. The thermal flux curve was obtained in a condition where about 10 mg of a sample was subjected to a temperature rise from room temperature (25°C) to 150°C at 10°C/min, then cooling to -100°C, retention for 5 minutes, and thereafter a temperature rise to 150°C at 10°C/min.
Measurement instrument: DSC6220 manufactured by SII Crystal Technology Inc.
Measurement atmosphere: under nitrogen atmosphere

### <Calculation of monomer compositional ratio of polymer>

The monomer compositional ratio of polymer was calculated from the amount of loading and the amount of monomer consumption by gas chromatograph (GC) measurement.

### 1. Synthesis of acrylic pressure-sensitive adhering polymer

### [Synthesis Example 1] Polymer A-1 used in Examples 1 to 3 and Comparative Examples 1 to 2

A four-necked flask having an inner volume of 1 L was loaded with 4-benzoylphenyl methacrylate (hereinafter, also referred to as "BPMA") (11 parts by mass), methyl acrylate (hereinafter, also referred to as "MA") (99 parts by mass), 2-ethylhexyl EO-modified (n ≈ 2) acrylate (trade name "Aronix M-120", manufactured by Toagosei Co., Ltd., hereinafter, also referred to as "M-120") (99 parts by mass), 4-hydroxybutyl acrylate (hereinafter, also referred to as "4HBA") (11 parts by mass), and ethyl acetate (320 parts by mass). This mixed liquid was sufficiently degassed by purging with a nitrogen gas, the inner temperature of the mixed liquid was raised to 75°C, and 2,2'-azobis(2,4-dimethylvaleronitrile) (manufactured by FUJIFILM Wako Pure Chemical Corporation, hereinafter, also referred to as "V-65") (0.20 parts by mass) was loaded to initiate polymerization. After 5 hours, ethyl acetate was added so that the solid content was 30% by mass, to obtain an ethyl acetate solution of polymer A-1. Polymer A-1 obtained was composed of 5% by mass of BPMA, 45% by mass of MA, 45% by mass of M-120, and 5% by mass of 4HBA, and the Mw was 590000, the Mw/Mn was 4.7, and the Tg was - 30°C.

### [Synthesis Example 2] Polymer A-2 used in Example 4

A four-necked flask having an inner volume of 1 L was loaded with BPMA (22 parts by mass), MA (121 parts by mass), M-120 (66 parts by mass), 4HBA (11 parts by mass), and ethyl acetate (320 parts by mass). This mixed liquid was sufficiently degassed by purging with a nitrogen gas, the inner temperature of the mixed liquid was raised to 75°C, and V-65 (0.20 parts by mass) was loaded to initiate polymerization. After 5 hours, ethyl acetate was added so that the solid content was 30% by mass, to obtain an ethyl acetate solution of polymer A-2. Polymer A-2 obtained was composed of 10% by mass of BPMA, 55% by mass of MA, 30% by mass of M-120, and 5% by mass of 4HBA, and the Mw was 560000, the Mw/Mn was 4.1, and the Tg was -14°C.

### [Synthesis Example 3] Polymer A-3 used in Example 5

A four-necked flask having an inner volume of 1 L was loaded with BPMA (22 parts by mass), n-butyl acrylate (hereinafter, also referred to as "BA") (121 parts by mass), M-120 (66 parts by mass), 4HBA (11 parts by mass), and ethyl acetate (320 parts by mass). This mixed liquid was sufficiently degassed by purging with a nitrogen gas, the inner temperature of the mixed liquid was raised to 75°C, and V-65 (0.20 parts by mass) was loaded to initiate polymerization. After 5 hours, ethyl acetate was added so that the solid content was 30% by mass, to obtain an ethyl acetate solution of polymer A-3. Polymer A-3 obtained was composed of 5% by mass of BPMA, 45% by mass of BA, 45% by mass of M-120, and 5% by mass of 4HBA, and the Mw was 550000, the Mw/Mn was 4.2, and the Tg was -54°C.

### [Synthesis Example 4] Polymer A-4 used in Comparative Example 3

A four-necked flask having an inner volume of 3 L was loaded with n-butyl acrylate (hereinafter, also referred to as "BA") (90 parts by mass), 2-methoxyethyl acrylate (hereinafter, also referred to as "C1") (413 parts by mass), 2-hydroxyethyl acrylate (hereinafter, also referred to as "HEA") (27 parts by mass), and ethyl acetate (980 parts by mass). This mixed liquid was sufficiently degassed by purging with a nitrogen gas, the inner temperature of the mixed liquid was raised to 75°C, and V-65 (0.25 parts by mass) was loaded to initiate polymerization. After 5 hours, ethyl acetate was added so that the solid content was 30% by mass, to obtain an ethyl acetate solution of polymer A-4. Polymer A-4 obtained was composed of 17% by mass of BA, 78% by mass of C1, and 5% by mass of HEA, and the Mw was 570000, the Mw/Mn was 3.6, and the Tg was -35°C.

### 2. Preparation of pressure-sensitive adhesive composition and production of pressure-sensitive adhesion sheet

### [Example 1]

An isocyanate-based curing agent "Takenate D-110N" (manufactured by Mitsui Chemicals, Inc.) was added as a crosslinking agent in an amount of 0.2 parts by mass (solid content) relative to polymer A-1 (100 parts by mass in terms of solid content), to the ethyl acetate solution of polymer A-1 obtained in Synthesis Example 1, to prepare a pressure-sensitive adhesive composition.

A separator made of polyethylene terephthalate (hereinafter, also referred to as "PET") having a thickness of 38 µm was coated with the pressure-sensitive adhesive composition so that the thickness after drying was 40 µm. The pressure-sensitive adhesive composition was dried at 100°C for 4 minutes to remove ethyl acetate. Thereafter, a separator made of PET having a thickness of 38 µm, having different release force from the above separator, was attached, and left to stand and aged (aging) at 40°C for 5 days, to obtain a pressure-sensitive adhesion sheet sample where crosslinking formation was made and the separator was disposed on each of both surfaces. The pressure-sensitive adhesion sheet sample obtained was used and various evaluations were performed by the following methods.

### <Evaluation methods>

### · Gel fraction measurement

From the pressure-sensitive adhesive layer of the pressure-sensitive adhesion sheet sample (namely, pressure-sensitive adhesion sheet before attachment to an adherend) was collected 0.2 g of a pressure-sensitive adhesive, and the initial mass of the pressure-sensitive adhesive was weighed. The pressure-sensitive adhesive was immersed in 50 g of ethyl acetate, and left to stand at room temperature for 16 hours. Thereafter, the resultant was filtrated with a 200-mesh wire net, and the remaining content remaining on the mesh was dried at 80°C for 3 hours and weighed. The gel fraction based on the acrylic pressure-sensitive adhering polymer was calculated from the initial mass and the mass of the remaining content, according to the following expression. Gel fraction (%) = (Mass of remaining content)/[(Initial mass) × (Solid content of acrylic pressure-sensitive adhering polymer)/(Solid content of entire pressure-sensitive adhesive composition)] × 100

### · Evaluation of easy releasability

The pressure-sensitive adhesion sheet sample was transferred to a polyimide film (Apical (registered trademark), 25 µm thickness, manufactured by Kaneka Corporation) to obtain a first pressure-sensitive adhesion sheet for evaluation. A glass plate (Fabritech FL11A, 1 mm thickness, manufactured by AGC Inc.) was used as an adherend, and the first pressure-sensitive adhesion sheet for evaluation was attached to the glass plate to provide a stacked body of glass plate/pressure-sensitive adhesive layer/polyimide film. After manual attachment by a hand roller, a tensile tester (Autograph AGS, manufactured by Shimadzu Corporation) was used to measure the 180-degree release strength of the first pressure-sensitive adhesion sheet for evaluation at 23°C according to "Testing methods of pressure-sensitive adhesive tapes and sheets" of JIS Z-0237. The rate of release was 300 mm/min. The measurement value was defined as the release strength S1 before UV irradiation.

Separately, the pressure-sensitive adhesion sheet sample was transferred to a polyimide film (Apical (registered trademark), 25 µm thickness, manufactured by Kaneka Corporation) to obtain a second pressure-sensitive adhesion sheet for evaluation. A glass plate (Fabritech FL11A, 1 mm thickness, manufactured by AGC Inc.) was used as an adherend, and the second pressure-sensitive adhesion sheet for evaluation was attached to the glass plate to provide a stacked body of glass plate/pressure-sensitive adhesive layer/polyimide film. After manual attachment by a hand roller, a UV irradiator (mini GRANDAGE ECS-1511U, equipped with metal halide lamp, manufactured by Eye Graphics Company) was used for irradiation of the side of the glass plate with ultraviolet light at a wavelength of 365 nm at room temperature (25°C) in an amount of exposure of 3,000 mJ/cm². Thereafter, the 180-degree release strength of the second pressure-sensitive adhesion sheet for evaluation was measured in the same manner as described above, and was defined as the release strength S2 after UV irradiation. Here, the gel fraction of the second pressure-sensitive adhesion sheet for evaluation after UV irradiation was measured by the above method, and thus was more than 90%.

The ratio (S2/S1) of the release strength S2 after UV irradiation to the release strength S1 before UV irradiation was determined, and easy releasability was evaluated according to the following criteria.
○: S2/S1 is 0.7 or less
×: S2/S1 is more than 0.7

### · Evaluation of heat resistance (heating test)

Two glass plates (size 30 mm × 50 mm, 0.15 mm thickness) were used for an adherend, and the separator was released from the pressure-sensitive adhesion sheet sample and manually attached to the glass plates by a hand roller, to provide a stacked body of glass plate/pressure-sensitive adhesive layer/glass plate. After manual attachment by a hand roller, the stacked body was heated on a hot plate at 200°C for 10 minutes. The appearance of the stacked body after heating was visually observed, and the heat resistance was evaluated according to the following criteria. It is here indicated that, as the size of air bubbles is larger and the number of air bubbles is smaller, foaming or peeling from the pressure-sensitive adhesive layer due to heating less occurs and the heat resistance is more favorable.
○: no air bubbles of 1 mmφ or more
×: air bubbles of 1 mmφ or more

### · Evaluation of heat resistance (thermogravimetric measurement)

The separator was released from the pressure-sensitive adhesion sheet sample, the pressure-sensitive adhesive layer in the form of a single body was weighed and taken in an aluminum pan, and the aluminum pan was set to a thermogravimetric measurement apparatus (TG/DTA, STA2500Regulus model, manufactured by manufactured by NETZSCH). Such a measurement sample was heated from 25°C to 350°C at a rate of temperature rise of 20°C/min in a thermogravimetric measurement apparatus under a nitrogen atmosphere, and the weight loss rate at 200°C was measured. The measurement value of the weight loss rate was used to evaluate the heat resistance of the pressure-sensitive adhesive layer according to the following criteria. It is here indicated that, as the value of the weight loss rate is smaller, foaming in application of a thermal load to the pressure-sensitive adhesive layer less occurs and the heat resistance is more favorable.
○: a weight loss rate of 5% by weight or less
×: a weight loss rate of more than 5% by weight

### [Example 2]

A pressure-sensitive adhesive composition was produced by performing the same operations as in Example 1 except that the amount of addition of the crosslinking agent "Takenate D-110N" was 0.4 parts by mass based on 100 parts by mass of the acrylic pressure-sensitive adhering polymer, and various evaluations were performed in the same manner as in Example 1.

### [Example 3]

The ethyl acetate solution of polymer A-1 obtained in Synthesis Example 1 was used as a pressure-sensitive adhesive composition, and a separator made of PET having a thickness of 38 µm was coated with the pressure-sensitive adhesive composition so that the thickness after drying was 40 µm. The pressure-sensitive adhesive composition was dried at 120°C for 4 minutes to remove ethyl acetate. Thereafter, a separator made of PET having a thickness of 38 µm, having different release force from the above separator, was attached, and irradiated with 500 mJ/cm² of UV at a wavelength of 365 nm by a UV irradiator (mini GRANDAGE ECS-1511U, equipped with metal halide lamp, manufactured by Eye Graphics Company), to crosslink (pre-crosslink) one portion of a polymer. Thus, a pressure-sensitive adhesion film sample with the separator disposed on both surfaces thereof was obtained. The pressure-sensitive adhesion sheet sample obtained was used, and various evaluations were performed in the same manner as in Example 1.

### [Example 4]

A pressure-sensitive adhesive composition was produced by performing the same operations as in Example 1 except that polymer A-2 obtained in Synthesis Example 2 was used instead of polymer A-1 and the amount of addition of the crosslinking agent "Takenate D-110N" was 0.4 parts by mass based on 100 parts by mass of the acrylic pressure-sensitive adhering polymer, and various evaluations were performed in the same manner as in Example 1.

### [Example 5]

A pressure-sensitive adhesive composition was produced by performing the same operations as in Example 1 except that polymer A-3 obtained in Synthesis Example 3 was used instead of polymer A-1 and the amount of addition of the crosslinking agent "Takenate D-110N" was 0.4 parts by mass based on 100 parts by mass of the acrylic pressure-sensitive adhering polymer, and various evaluations were performed in the same manner as in Example 1.

### [Example 6]

A pressure-sensitive adhesive composition was produced by performing the same operations as in Example 1 except that the amount of addition of the crosslinking agent "Takenate D-110N" was 0.04 parts by mass based on 100 parts by mass of the acrylic pressure-sensitive adhering polymer, and various evaluations were performed in the same manner as in Example 1.

### [Comparative Example 1]

A pressure-sensitive adhesive composition was produced by performing the same operations as in Example 1 except that the amount of addition of the crosslinking agent "Takenate D-110N" was 4 parts by mass based on 100 parts by mass of the acrylic pressure-sensitive adhering polymer, and various evaluations were performed in the same manner as in Example 1.

### [Comparative Example 2]

A pressure-sensitive adhesive composition was produced by performing the same operations as in Example 1 except that the amount of addition of the crosslinking agent "Takenate D-110N" was 0.4 parts by mass based on 100 parts by mass of the acrylic pressure-sensitive adhering polymer, 30 parts by mass of a polyfunctional acrylate, trade name "Aronix M-402" (manufactured by Toagosei Co., Ltd.), was added based on 100 parts by mass of the acrylic pressure-sensitive adhering polymer and 3 parts by mass of "OMNIRAD 184" as an photo-initiator was added based on 100 parts by mass of the acrylic pressure-sensitive adhering polymer, and various evaluations were performed in the same manner as in Example 1.

### [Comparative Example 3]

A pressure-sensitive adhesive composition was produced by performing the same operations as in Example 1 except that polymer A-4 obtained in Synthesis Example 4 was used instead of polymer A-1 and the amount of addition of the crosslinking agent "Takenate D-110N" was 0.4 parts by mass based on 100 parts by mass of the acrylic pressure-sensitive adhering polymer, and various evaluations were performed in the same manner as in Example 1.

Table 1 shows the compositional ratios and evaluation results of the pressure-sensitive adhesive compositions in Examples 1 to 6 and Comparative Examples 1 to 3.

**[Table 1]**

| | | | | | Example 1 | Example 2 | Example 3 | Example 4 | Example 5 | Example 6 | Comparative Example 1 | Comparative Example 2 | Comparative Example 3 |
|---|---|---|---|---|---|---|---|---|---|---|---|---|---|
| pressure-sensitive adhesive composition | acrylic pressure-sensitive adhering polymer | compos itional ratio (wt%) | BPMA | 418 °C | 5 | 5 | 5 | 10 | 5 | 5 | 5 | 5 | |
| | | | MA | 80 °C | 45 | 45 | 45 | 55 | | 45 | 45 | 45 | |
| | | | M-120 | 340 °C | 45 | 45 | 45 | 30 | 45 | 45 | 45 | 45 | |
| | | | BA | 145 °C | | | | | 45 | | | | 17 |
| | | | C1 | 151 °C | | | | | | | | | 78 |
| | | | 4HBA | 298 °C | 5 | 5 | 5 | 5 | 5 | 5 | 5 | 5 | |
| | | | HEA | 196 °C | | | | | | | | | 5 |
| | | polymer name | | | A-1 | A-1 | A-1 | A-2 | A-3 | A-1 | A-1 | A-1 | A-4 |
| | | glass transition temperature (°C) | | | -30 | -30 | -30 | -14 | -54 | -30 | -30 | -30 | -35 |
| | | weight average molecular weight (×10^4) | | | 59 | 59 | 59 | 56 | 55 | 59 | 59 | 59 | 57 |
| | | molecular weight distribution (Mw/Mn) | | | 4.7 | 4.7 | 4.7 | 4.1 | 4.2 | 4.7 | 4.7 | 4.7 | 3.6 |
| | crosslinking agent | D-110N | parts | | 0.2 | 0.4 | | 0.4 | 0.4 | 0.04 | 4 | 0.4 | 0.4 |
| | polyfunction al acrylate | M-402 | parts | | | | | | | | | 30 | |
| | photopolym erization initiator | OMNIR AD | parts | | | | | | | | | 3 | |
| pre-crosslinking | | | | | No | No | Yes | No | No | No | No | No | No |
| evaluation results | | gel fraction (%) | | | 38 | 75 | 50 | 73 | 72 | 4 | 91 | 60 | 70 |
| | | easy releasability | | | ○ | ○ | ○ | ○ | ○ | ○ | × | ○ | × |
| | | heat resistan ce | heating test | | ○ | ○ | ○ | ○ | ○ | ○ | ○ | × | × |
| | | | thermogravimetric measurement | | ○ | ○ | ○ | ○ | ○ | ○ | ○ | × | × |

In Table 1, abbreviations represent the following names.
BPMA: 4-benzoylphenyl methacrylate (boiling point 418°C)
MA: methyl acrylate (boiling point 80°C)
M-120: 2-ethylhexylEO-modified (n ≈2)acrylate, trade name "Aronix M-120", manufactured by Toagosei Co., Ltd. (boiling point 340°C)
BA: n-butyl acrylate (boiling point 145°C)
C1: 2-methoxyethyl acrylate (boiling point 151°C)
4HBA: 4-hydroxybutyl acrylate (boiling point 298°C)
HEA: 2-hydroxyethyl acrylate (boiling point 196°C)
D-110N: isocyanate-based curing agent, trade name "Takenate D-110N", manufactured by Mitsui Chemicals, Inc.
M-402: polyfunctional acrylate, trade name "Aronix M-402", manufactured by Toagosei Co., Ltd.
OMNIRAD: intramolecular cleavage-type photopolymerization initiator, trade name "OMNIRAD 184", manufactured by IGM Resins B.V

Herein, the amounts of compounding of the crosslinking agent, the polyfunctional acrylate and the photopolymerization initiator are each an amount of compounding based on 100 parts by mass of the acrylic pressure-sensitive adhering polymer. The boiling point of each monomer is a predicted value under atmospheric pressure, as calculated by the scientific research information management solution (ACD/Labs) of Fujitsu Limited. The boiling point (predicted value) of each monomer was also shown in Table 1.

As shown in Table 1, all the pressure-sensitive adhesion sheets which each contained any of polymers A-1 to A-3 as the acrylic pressure-sensitive adhering polymer, in which the contents of the crosslinking agents were sufficiently low and which were each produced with the pressure-sensitive adhesive composition containing no polyfunctional acrylate were favorable in easy releasability and heat resistance (Examples 1 to 6).

On the contrary, the pressure-sensitive adhesion sheet formed with the pressure-sensitive adhesive composition in which the content of the crosslinking agent was 4 parts by mass based on 100 parts by mass of the acrylic pressure-sensitive adhering polymer was rated as "×" with respect to easy releasability (Comparative Example 1). In addition, the pressure-sensitive adhesion sheet in which the pressure-sensitive adhesive layer was formed with the pressure-sensitive adhesive composition containing polyfunctional acrylate was rated as "×" with respect to heat resistance (Comparative Example 2). Furthermore, the pressure-sensitive adhesion sheet formed with the pressure-sensitive adhesive composition containing polymer A-4 as the acrylic pressure-sensitive adhering polymer was rated as "×" with respect to both easy releasability and heat resistance (Comparative Example 3).

The present invention is not limited to the above embodiments, and also encompasses various modification examples and modifications falling within the equivalency range without departing from the gist of the present invention. Accordingly, it is to be understood that not only various combinations and forms in view of the above teaching, but also any other combination and form including only one element, any element equal to or more than such one element, or any element equal to or less than such one element also fall within the category and the idea of the present invention.

### Reference Signs List

10 ... pressure-sensitive adhesion sheet, 11 ... first separator, 12 ... pressure-sensitive adhesive layer, 13 ... second separator, 21 ... glass substrate, 22 ... semiconductor chip, 23 ... sealing layer, 24 ... semiconductor sealing body, 25 ... interface

## Claims

1. An active energy ray-curable pressure-sensitive adhesive composition,
comprising no a compound comprising two or more reactive unsaturated bonds in one molecule, and
comprising an acrylic pressure-sensitive adhering polymer (A) comprising at least one selected from the group consisting of an ether group, a hydroxyl group, aliphatic tertiary carbon, a secondary amino group and a tertiary amino group in a side chain, wherein
the acrylic pressure-sensitive adhering polymer (A) comprises a structural unit (U1) comprising a hydrogen abstraction type photopolymerization initiator structure,
a content rate of the structural unit (U1) in the acrylic pressure-sensitive adhering polymer (A) is 0.1% by mass or more and 50% by mass or less relative to the entire structural unit of the acrylic pressure-sensitive adhering polymer (A), and
a content of a crosslinking agent is 0 parts by mass or more and 3 parts by mass or less based on a content of the acrylic pressure-sensitive adhering polymer (A) of 100 parts by mass.

2. The active energy ray-curable pressure-sensitive adhesive composition according to claim 1, wherein
the acrylic pressure-sensitive adhering polymer (A) comprises a structural unit (U2) derived from a (meth)acrylic monomer comprising at least one selected from the group consisting of an ether group, a hydroxyl group, aliphatic tertiary carbon (except for carbon atoms constituting a carbon-carbon double bond in a methacryloyl group), a secondary amino group and a tertiary amino group, and
a content rate of the structural unit (U2) in the acrylic pressure-sensitive adhering polymer (A) is 10% by mass or more relative to the entire structural unit of the acrylic pressure-sensitive adhering polymer (A).

3. The active energy ray-curable pressure-sensitive adhesive composition according to claim 1, wherein the acrylic pressure-sensitive adhering polymer (A) comprises a structural unit derived from a monomer represented by the following formula (1):
CH₂=CR¹-C(=O)O-(R²O)ₙ-R³ ... (1)
wherein R¹ represents a hydrogen atom or a methyl group, R² represents a linear or branched alkylene group having 2 to 6 carbon atoms, R³ represents a hydrogen atom or a monovalent hydrocarbon group having 1 to 20 carbon atoms, and n represents an integer of 2 to 100.

4. The active energy ray-curable pressure-sensitive adhesive composition according to claim 1, wherein a glass transition temperature of the acrylic pressure-sensitive adhering polymer (A) is -70°C or more and 0°C or less.

5. The active energy ray-curable pressure-sensitive adhesive composition according to claim 1, wherein a weight average molecular weight of the acrylic pressure-sensitive adhering polymer (A) is 100,000 or more.

6. The active energy ray-curable pressure-sensitive adhesive composition according to claim 1, wherein the acrylic pressure-sensitive adhering polymer (A) comprises 50% by mass or more of a structural unit derived from at least one monomer selected from the group consisting of a (meth)acrylic monomer having a boiling point at atmospheric pressure of 150°C or less and a (meth)acrylic monomer having a boiling point at atmospheric pressure of 200°C or more, relative to the entire structural unit of the acrylic pressure-sensitive adhering polymer (A).

7. The active energy ray-curable pressure-sensitive adhesive composition according to claim 1, comprising the crosslinking agent.

8. The active energy ray-curable pressure-sensitive adhesive composition according to claim 1, for a semiconductor manufacturing process.

9. A pressure-sensitive adhesion sheet comprising a pressure-sensitive adhesive layer formed with the active energy ray-curable pressure-sensitive adhesive composition according to any one of claims 1 to 8.

10. The pressure-sensitive adhesion sheet according to claim 9, wherein a gel fraction based on the acrylic pressure-sensitive adhering polymer (A) in the pressure-sensitive adhesive layer before attachment with an adherend is 90% or less.

11. The pressure-sensitive adhesion sheet according to claim 9, wherein a weight loss rate at 200°C in the pressure-sensitive adhesive layer, as measured by thermogravimetric measurement in conditions of a rate of temperature rise of 20°C/min and a range of temperature rise of 25 to 350°C, is 5% by weight or less.

12. The pressure-sensitive adhesion sheet according to claim 9, wherein a ratio (S2/S1) between a release strength (S1) before the pressure-sensitive adhesion sheet attached to an adherend is irradiated with an active energy ray, and a release strength (S2) after the pressure-sensitive adhesion sheet attached to an adherend is irradiated with an active energy ray to allow a gel fraction based on the acrylic pressure-sensitive adhering polymer (A) in the pressure-sensitive adhesive layer to be more than 90% is 0.7 or less.
